# EUROPÄISCHE PATENTANMELDUNG

(11) **EP 4 792 704 A1**
(43) Veröffentlichungstag der Anmeldung: **19.08.2026**
(21) Anmeldenummer: 25157637.7
(22) Anmeldetag: 13.02.2025
(51) Int. Cl.: A47J 43/08, H02P 21/00

(54) **KÜCHENMASCHINE UND VERFAHREN ZUM BETRIEB EINER KÜCHENMASCHINE**

(71) Anmelder: Vorwerk & Co. Interholding GmbH, 42275 Wuppertal (DE)
(72) Erfinder: SEIBT, Patrick, 40789 Monheim am Rhein (DE); ARNDT, Simon, 42929 Wermelskirchen (DE)
(74) Vertreter: Von Rohr Patentanwälte Partnerschaft mbB

(57) **Zusammenfassung**

Die vorliegende Erfindung betrifft ein Verfahren zum Betrieb einer Küchenmaschine, deren Rührer mit einem elektronisch kommutierten Elektromotor angetrieben wird, wobei der Elektromotor im insbesondere zweiten Feldschwächbereich betrieben wird, und eine Küchenmaschine, die zur Durchführung des Verfahrens ausgebildet ist.

## Beschreibung

Die vorliegende Erfindung betrifft ein Verfahren zum Betrieb einer Küchenmaschine und eine Küchenmaschine, die zur Durchführung des Verfahrens ausgebildet ist.

Insbesondere betrifft die vorliegende Erfindung den Antrieb des Rührwerks einer Küchenmaschine zum Durchführen eines Zubereitungsvorgangs durch Erhitzen, Zerkleinern und/oder Mischen zur Herstellung eines Produkts, wie einer Speise oder eines Zwischenprodukts, in einem Zubereitungsgefäß.

Besonders bevorzugt, jedoch nicht zwingend handelt es sich um eine Küchenmaschine, die gespeicherte Rezepte bereitstellt und ein zumindest teilautomatisiertes Durchführen von mehreren Schritten eines Rezeptes unterstützt.

Zu diesem Zweck weist die gattungsgemäße Küchenmaschine ein optionales Gefäß zur Aufnahme des Lebensmittels, ein elektrisches Heizsystem zum Erhitzen des Lebensmittels und/oder einen Rührer zum Kneten/Umrühren/Mischen und/oder Zerkleinern des Lebensmittels auf.

Antriebe für Rührwerke elektrisch betriebener Küchenmaschinen der in Rede stehenden Art weisen einen Elektromotor und einen Motorregler zur Regelung des Elektromotors auf. Unter der Regelung des Elektromotors ist bevorzugt die Regelung einer Rotorbewegung, also der Bewegung eines antreibbaren Rotors, des Elektromotors zu verstehen. Insbesondere ist der Antriebsregler zur Regelung einer Rotordrehzahl und/oder Rotorposition des Elektromotors bzw. seines Rotors ausgebildet.

Antriebe von Küchenmaschinen werden bisher insbesondere so ausgelegt, dass ein ausreichend hohes Drehmoment zum Kneten von Teig bereitgestellt wird. Oftmals wird eine Motordrehzahl hierfür mit einem Getriebe untersetzt. Elektromotoren werden im Ankerstellbereich betrieben. Hierdurch ist die maximale Drehzahl beschränkt und die Küchenmaschine letztlich für einen universellen Einsatz nur bedingt geeignet.

Küchenmaschinen im Sinne der vorliegenden Erfindung sind vorzugsweise zum Kneten von Teig geeignet. Bevorzugt werden durch Küchenmaschinen im Sinne der vorliegenden Erfindung jedenfalls auch Drehzahlen von unter 200 oder unter 100 Umdrehungen pro Minute und/oder Drehmomente von mehr als 5 Nm, 10 Nm, 20 Nm oder 50 Nm durch den Elektromotor bzw. über den Rührer bereitgestellt.

Elektromotoren, beispielsweise in Form von bürstenlosen Gleichstrommotoren (BLDC-Motoren) oder geschalteten Reluktanzmotoren (SR-Motoren), sind aus dem Stand der Technik für Antriebe von Küchenmaschinen bekannt. Sie weisen einen Ständer/Stator und einen relativ zum Stator rotierenden Läufer/Rotor auf.

Bei geschalteten Reluktanzmotoren, die bisher in Küchenmaschinen vorwiegend eingesetzt werden, ist der Stator mit Statorspulen bestückt, der Rotor weist jedoch keine Permanentmagnete oder Spulen auf, sondern besteht aus Elektroblech oder dergleichen. Das Drehmoment im Rotor wird hierbei ausschließlich durch die Reluktanzkraft erzeugt.

Bei bürstenlosen Gleichstrommotoren ist der Stator mit Statorspulen und der Rotor mit Permanentmagneten bestückt. Die Permanentmagnete können hierbei außen am Rotorkern (SPM - Surface Permanent Magnet) oder im Rotorkern vorgesehen bzw. eingebettet sein (IPM - Interior Permanent Magnet).

Grundsätzlich ist der Einsatz von modernen Motorkonzepten auch bei Küchenmaschinen bekannt. Beispielsweise wird in der EP 4 293 880 ein BLDC-Motor zum Einsatz in Küchenmaschinen beschrieben, der ein ausreichendes Drehmoment zum Kneten von Teig ermöglichen kann.

Antriebe von Standmixern wiederum arbeiten regelmäßig mit sehr hohen Drehzahlen zum Aufschlagen flüssiger Lebensmittel und zum Zerschlagen von Bestandteilen. Hier sind Getriebe im Hinblick auf die hohen Drehzahlen von beispielsweise mindestens 2500 Umdrehungen pro Minute tendenziell unüblich und ungeeignet; das begrenzte Drehmoment von Direktantrieben in Standmixern ist aufgrund der geringeren Viskosität der in der Regel flüssigen Lebensmittel in diesem Fall unkritisch. Aus Standmixern bekannte Direktantriebe sind nicht so ausgelegt, dass sie niedrige Drehzahlen oder hohe Drehmomente zum Kneten von Teig ermöglichen. Standmixer sind daher keine Küchenmaschinen im Sinne der vorliegenden Erfindung.

Der vorliegenden Erfindung liegt die Aufgabe zugrunde, ein Verfahren zum Betrieb einer Küchenmaschine und eine zur Durchführung des Verfahrens ausgebildete Küchenmaschine anzugeben, wodurch sowohl ein Kneten von Lebensmitteln mit hohen Drehmomenten als auch ein Zerkleinern, Aufschlagen und/oder Zerschlagen von Lebensmitteln bei hohen Drehzahlen ermöglicht wird.

Die der Erfindung zugrundeliegende Aufgabe wird durch ein Verfahren gemäß Anspruch 1 oder eine Küchenmaschine gemäß Anspruch 15 gelöst. Vorteilhafte Weiterbildungen sind Gegenstand der Unteransprüche.

Ein erster Aspekt der vorliegenden Erfindung betrifft ein Verfahren zum Betrieb einer Küchenmaschine, deren Rührer mit einem elektronisch kommutierten Elektromotor angetrieben wird, der im Feldschwächbereich, insbesondere zweiten Feldschwächbereich, betrieben wird.

Üblicherweise werden Elektromotoren nur im Ankerstellbereich bzw. bis zur Nenndrehzahl betrieben. Diese Drehzahlen liegen in der Regel allenfalls bei wenigen hundert Umdrehungen pro Minute, wenn mit klassischen Konzepten und ausreichend kompakten Bauformen die Drehmomente erreicht werden sollen, die insbesondere bei Direktantrieb zum Kneten von Teig erforderlich sind.

Die Erfindung geht hier einen anderen Weg, indem beim Antrieb einer Küchenmaschine elektronisch kommutierte Elektromotoren, insbesondere BLDC-Motoren (Brushless DC Motoren) oder PMSM (Permanent Magnet Synchronous Motoren) mit Feldschwächung zur Erweiterung des Drehzahlbereichs über die Nenndrehzahl hinaus eingesetzt werden.

Der Ankerstellbereich (Grundbereich) ist hierbei vorzugsweise der (Drehzahl-)Bereich, in dem der Elektromotor mit voller (Zwischenkreis-)Spannung bzw. mit konstantem magnetischem Fluss betrieben wird bzw. ohne Notwendigkeit einer Feldschwächung betrieben werden kann. Der Elektromotor wird hierbei mit konstantem bzw. maximalem Drehmoment betrieben. Die maximale Drehzahl im Ankerstellbereich wird durch die Nenndrehzahl des Elektromotors begrenzt.

Der Feldschwächbereich schließt sich an den Ankerstellbereich an. Im Feldschwächbereich wird der magnetische Fluss gezielt reduziert, also eine Feldschwächung eingesetzt. Hierdurch können (höhere) Drehzahlen erreicht werden, die über die Nenndrehzahl hinaus gehen. Das Drehmoment ist im Feldschwächbereich gegenüber dem Ankerstellbereich reduziert, nimmt insbesondere im Feldschwächbereich mit zunehmender Drehzahl ab.

Da mit Eintritt in dem Feldschwächbereich eine Abnahme des im Ankerstellbereich zumindest im Wesentlichen konstanten Drehmoments verbunden ist, wurde der Feldschwächbereich bisher bei Antrieben für Küchenmaschinen vermieden.

Es werden grundsätzlich zwei Feldschwächbereiche unterschieden, die durch spezifische Anpassungen der Strom- und Spannungsregelung charakterisiert sind.

Im ersten Feldschwächbereich kann die Drehzahl über die Nenndrehzahl erhöht werden. In diesem Bereich kann die verfügbare Betriebsspannung vollständig genutzt werden. Die Phasenströme bleiben dabei vorzugsweise nahezu sinusförmig, während ihre Amplitude aufgrund der höheren induktiven Reaktanz des Elektromotors reduziert wird. Gleichzeitig erfolgt vorzugsweise eine Modulation der Phasenspannungen.

Vorschlagsgemäß wird der Elektromotor vorzugsweise zumindest auch im zweiten Feldschwächbereich betrieben bzw. die Küchenmaschine ist dazu ausgelegt. Hierbei wird die Drehzahl ausgehend vom ersten Feldschwächbereich weiter gesteigert, indem der magnetische Fluss des Elektromotors gezielt reduziert wird. Die Phasenspannungen können hierbei nahezu unverändert bleiben, da sie üblicherweise durch die Betriebsspannung des Wechselrichters begrenzt sind. Die Phasenströme können hingegen deutliche Verzerrungen aufweisen, die vorzugsweise durch eine bewusste Verschiebung des Stromwinkels, eine Reduktion der Stromamplitude und/oder eine aktive Kompensation der Gegen-EMK (elektromagnetische Kraft) entstehen.

Der zweite Feldschwächbereich im Sinne der vorliegenden Erfindung ist bevorzugt dadurch gekennzeichnet, dass die Gegen-EMK die Betriebsspannung des die Phasen des Elektromotors speisenden Wechselrichters erreicht oder überschreitet. Die Phasenspannung kann daher nicht mehr frei gesteuert werden, da sie durch die Betriebsspannung begrenzt ist. Der Stromwinkel wird daher vorzugsweise aktiv angepasst, um die Gegen-EMK zu kompensieren und dennoch ein nutzbares Drehmoment zu erzeugen. Alternativ oder zusätzlich werden die Phasenströme zunehmend verzerrt. Die Schaltfrequenz einer PWM (Puls-Weiten-Modulation) zur Steuerung des Wechselrichters bzw. Erzeugung der Phasenspannung wird oder ist ggf. erhöht, um die Regelbarkeit bei hohen Drehzahlen aufrechtzuerhalten.

Der Betrieb im zweiten Feldschwächbereich erfordert es, bei der Drehzahlerhöhung ausgehend vom Ankerstellbereich (Stillstand und an Stillstand grenzende, niedrigere Drehzahlen) zunächst den ersten Feldschwächbereich zu durchlaufen. Bereits ein Betrieb im ersten Feldschwächbereich wurde bisher bei Küchenmaschinen vermieden. In überraschender Weise hat sich jedoch gezeigt, dass Küchenmaschinen-Anwendungen, die eine höhere Drehzahl erfordern, üblicherweise mit geringeren Drehmomenten auskommen. Das Drehmoment reduziert sich bei einer vorschlagsgemäßen Motorregelung in einer Weise, die selbst den Einsatz im zweiten Feldschwächbereich unerwartet gut nutzbar erscheinen lässt.

Entgegen bisherigen Vorurteilen ist also eine Vermeidung des Feldschwächbereichs und insbesondere des zweiten Feldschwächbereichs nicht nötig, sondern deren Nutzung ermöglicht ein erweitertes Anwendungsspektrum der Küchenmaschine trotz weiterhin kompaktem, bei niedrigeren Drehzahlen ausreichend kräftigem Antrieb.

Somit hat sich herausgestellt, dass ein Betrieb über den ersten Feldschwächbereich hinaus bis in den zweiten Feldschwächbereich dazu führt, dass ein Elektromotor, der bei niedrigen Drehzahlen im Ankerstellbereich zum Kneten von Teig geeignete Drehmomente bereitstellt, bei niedrigeren, aber ausreichenden Drehmomenten höchste Drehzahlen zum Zerkleinern, Aufschlagen und/oder Homogenisieren von Lebensmitteln bereitstellen kann.

Im Ergebnis ermöglicht die vorliegende Erfindung durch die Nutzung eines elektrisch kommutierten Elektromotors und besonders bevorzugt BLDC- oder PMSM-Motors bis in den insbesondere zweiten Feldschwächbereich also einen universelleren Einsatz von Küchenmaschinen, die zum Kneten von Teig geeignet sind, bis hin zu extrem hohen Drehzahlen wie mehr als 10000 Umdrehungen pro Minute, um auch das Zerkleinern, Aufschlagen und/oder Homogenisieren von Lebensmitteln zu ermöglichen, was bisher Standmixern oder Pürierstäben vorbehalten war.

Der Elektromotor kann in einem Aspekt der vorliegenden Erfindung in einem wesentlichen Teil des einstellbaren Drehzahlbereichs im Feldschwächbereich betrieben werden. Besonders bevorzugt kann er in mindestens 25% oder 30%, vorzugsweise mindestens 40 % und insbesondere mehr als 50 % und/oder weniger als 80 % des einstellbaren Drehzahlbereichs des Elektromotors im Feldschwächbereich betrieben werden oder betreibbar sein. Besonders bevorzugt kann er in mindestens 20%, vorzugsweise mindestens 30 % und insbesondere mehr als 40 % oder 50 % und/oder weniger als 80 % oder 70 % des einstellbaren Drehzahlbereichs des Elektromotors im zweiten Feldschwächbereich betrieben werden oder betreibbar sein.

Auf diese Weise kann eine einstellbare oder im Betrieb erreichte Drehzahl des Elektromotors (und damit des Rührers der Küchenmaschine) mindestens 5000 Umdrehungen pro Minute, insbesondere mindestens 10000 Umdrehungen pro Minute betragen, obwohl der Elektromotor kompakt bleibt und einen entsprechend geringen Materialeinsatz erfordert.

In absoluten Zahlen kann der Elektromotor in einem Drehzahlspektrum von mehr als 2500 Umdrehungen pro Minute, vorzugsweise mehr als 4000 Umdrehungen pro Minute und insbesondere mehr als 6000 Umdrehungen pro Minute oberhalb der Nenndrehzahl bzw. im (zweiten) Feldschwächbereich betrieben werden bzw. betreibbar sein, beispielsweise im Bereich von 5000 U/min bis 10000 U/min. Auf der anderen Seite ist er vorzugsweise auch (im Ankerstellbereich) unterhalb von 200 Umdrehungen pro Minute oder 100 Umdrehungen pro Minute, insbesondere unterhalb von 50, 20 oder 10 Umdrehungen pro Minute, einsetzbar und einstellbar.

Die Ausdehnung des einstellbaren Drehzahlspektrum über einen so großen Anteil in den zweiten Feldschwächbereichs führt in vorteilhafter Weise dazu, dass sehr hohe Drehzahlen erreicht werden, die durchaus bei einem Vielfachen, also beispielsweise mehr als dem Doppelten, Dreifachen oder sogar Fünffachen, der Nenndrehzahl des Elektromotors liegen können.

Der Elektromotor wird oder ist besonders bevorzugt vektorbasiert geregelt. Eine vektorbasierte Regelung, insbesondere FOC - Field Oriented Control, ist eine fortgeschrittene Steuerungsmethode, die oft bei anspruchsvolleren Anwendungen eingesetzt wird. Vorzugsweise wird die Rotorposition kontinuierlich überwacht, typischerweise mit Encodern, Resolvern, Hallsensoren, optischen Sensoren wie Lichtschranken oder anderen Sensoren. Die Ströme in den Phasen werden bevorzugt zumindest im Wesentlichen sinusförmig moduliert. Die Regelung der Phasenströme erfolgt vorzugsweise im d-q-Koordinatensystem (rotierendes Koordinatensystem). Letztlich wird vorzugsweise das Drehmoment direkt kontrolliert, indem der magnetische Fluss (d-Komponente) und das erzeugte Drehmoment (q-Komponente) getrennt geregelt werden.

Durch die vektorbasierte Motorregelung, insbesondere FOC, ist eine präzise Regelung von Drehmoment, Drehzahl und Position möglich und es kann, besonders bei wechselnden Lastbedingungen, eine höhere Effizienz sowie eine sanftere und leisere Motorbewegung erreicht werden. Insbesondere ermöglicht die vektorbasierte Regelung jedoch einen zuverlässigen Betrieb des Elektromotors im zweiten Feldschwächbereich gerade bei sehr hohen Drehzahlen, in der eine präzise, schnelle Motorregelung die bereits beschriebene Drehzahlerhöhung eröffnet.

Der Elektromotor, mit dem der Rührer angetrieben wird, ist vorzugsweise ein bürstenloser Gleichstrommotor (BLDC) oder Permanentmagnet-Synchronmotor (PMSM). BLDC und PMSM ähneln sich konstruktiv und in der Regelung, sodass die Begriffe hier synonym zu verstehen sind, wenn nichts Gegenteiliges erläutert ist oder sich aus dem Zusammenhang ergibt.

Der Elektromotor weist vorzugsweise vier bis sechs Pole und/oder 10 bis 16 Statorschlitze auf. Es hat sich gezeigt, dass die für Küchenmaschinen benötigten Drehmomente und gewünschten Drehzahlen hierbei mit einer kompakten Konstruktion ermöglicht werden können.

Zudem ist der Elektromotor bevorzugt im Links- und Rechtslauf betreibbar oder wird so betrieben. Gerade bei kleineren Drehzahlen und insbesondere zum effizienten Kneten von Teigen hat es sich als vorteilhaft erwiesen, die Drehrichtung wechseln zu können. Der BLDC- bzw. PMSM-Motor bietet die Möglichkeit von Links- und Rechtslauf, nachdem die Regelung dies unterstützt, und die vorschlagsgemäße Küchenmaschine ist vorzugweise ebenfalls entsprechend konfigurierbar, um im Betrieb, beispielsweise bei entsprechenden Programmen und Rezepten, die Drehrichtung (temporär) zu ändern.

Wie bereits erwähnt, wird oder ist der Rührer durch den Elektromotor vorzugsweise direkt bzw. getriebelos angetrieben. Dies steigert die Zuverlässigkeit, nachdem Getriebe oft anfällig sind, reduziert die Geräuschentwicklung, nachdem Schwingungen vermieden werden, und ermöglicht auch die hohen Drehzahlen durch den Betrieb des Elektromotors im zweiten Feldschwächbereich, die mit einer Getriebeuntersetzung kaum möglich wären.

Der Elektromotor wird vorzugsweise grundsätzlich mit einer Power Factor Correction (PFC) betrieben. Die PFC ist vorzugsweise in das Eingangsstromsystem integriert, beispielsweise zwischen dem Netzanschluss und der Gleichrichtung bzw. dem Wechselrichter. Sie bewirkt vorzugsweise, die Stromaufnahme so anzupassen, dass sie sinusförmig und phasensynchron mit der Netzspannung ist. In der vorliegenden Erfindung ermöglicht die PFC insbesondere, den Gleichstrom im Zwischenkreis stabil zu halten und/oder die Effizienz der gesamten Motorregelung zu steigern sowie Netzprobleme zu vermeiden.

Es ist weiter bevorzugt, dass die PFC bei niedrigen Drehzahlen bzw. im Ankerstellbereich des Elektromotors deaktiviert wird oder ist. Hierdurch kann die Eingangsspannung (des Wechselrichters zur Erzeugung der Phasenspannungen bzw. Statorströme) gezielt abgesenkt werden. Dies wiederum kann in vorteilhafter Weise eine Reduktion des Spannungshubs und der maximal möglichen Stellgröße bzw. der maximal möglichen Phasenspannung ermöglichen. Die Deaktivierung der PFC bei niedrigen Drehzahlen bzw. im Ankerstellbereich, insbesondere von Küchenmaschinen, kann auch unabhängig von den weiteren Aspekten der vorliegenden Erfindung einen eigenständigen Erfindungsgedanken darstellen.

Vorzugsweise wird die Gegen-EMK (elektromagnetische Kraft) des Elektromotors überwacht. Dies ermöglicht eine Anpassung der Regelung, um bei höheren Drehzahlen einen effektiven und effizienten Betrieb zu erreichen.

Bei Erkennung einer zu großen Gegen-EMK kann ein Stromwinkel zwischen Phasenströmen und einem Rotorfluss aktiv angepasst werden. Alternativ oder zusätzlich können Phasenströme moduliert und/oder reduziert werden. Hierdurch kann ein magnetischer Fluss eines Rotors des Elektromotors begrenzt oder reduziert werden, insbesondere bevor das Risiko einer Entmagnetisierung oder Ummagnetisierung der Permanentmagnete des Rotors entsteht.

Weiter kann der Elektromotor mit Phasenströmen und/oder Phasenspannungen betrieben werden, die mit einem Modulationsverfahren höherer Ordnung, insbesondere einer Space Vector Modulation (SVM), bevorzugt mit trapezförmiger Nullsequenz, erzeugt werden. Statt direkt sinusförmige Signale zu erzeugen, verwendet SVM sogenannte Raumvektoren (Space Vectors), die durch Kombination der Schaltzustände der Wechselrichtertransistoren gebildet werden.

Die Zero-Sequence-Komponente ist eine zusätzliche Spannungskomponente, die allen drei Phasen gleichermaßen (im Gleichtakt) hinzugefügt wird. Bei einer "trapezoidalen" Zero-Sequence wird die Form der hinzugefügten Spannung als trapezförmig beschrieben. Die trapezförmige Zero-Sequence hat sich als vorteilhaft im vorliegenden Anwendungsfall gezeigt, um die Spannungsausnutzung zu maximieren und gleichzeitig eine gleichmäßige Stromform in den Phasen zu gewährleisten.

Der Elektromotor wird vorzugsweise mit einer Regelcharakteristik geregelt, die auf einem geschlossenen funktionalen Zusammenhang zwischen Eingangsgrößen und Ausgangsgrößen basiert. Hierdurch kann erreicht werden, dass ein Wechsel zwischen unterschiedlichen, den Elektromotor regelnden Regelverfahren, insbesondere bei einer Laständerung, stetig und unter Vermeidung von abrupten Änderungen oder Sprüngen von Spannungs- und/oder Stromverläufen erfolgt.

Vorzugweise wird der Elektromotor basierend auf einem oder mehreren Sensorwerten korrespondierend zu einer absoluten Rotorposition, zu einem oder mehreren Strangströmen des Elektromotors, zu einer Zwischenkreisspannung des Elektromotors, und/oder zu einer Motortemperatur, als Eingangsgrößen für ein den Elektromotor regelndes Regelverfahren und/oder unter Berücksichtigung von Parametern korrespondierend zu einem Massenträgheitsmoment, einem oder mehreren Spulenwiderständen, einem oder mehreren Induktivitätswerten und/oder einer Flussverkettung von Permanentmagneten des Rotors geregelt.

Einer oder mehrere der Phasenströme und/oder Strangströme des Elektromotors werden vorzugsweise überwacht. Bei Identifikation eines Fehlerstroms, insbesondere eines einen Schwellwert überscheitenden der Phasenströme oder Strangströme, werden die (Phasenströme und/oder) Strangströme abgeschaltet bzw. wird die Stromversorgung der Statorspulen ausgesetzt. Alternativ oder, bevorzugt, zusätzlich erfolgt ein Kurzschluss der Phasen. Hierdurch kann einer Überlastung des Elektromotors effektiv vorgebeugt werden, insbesondere da auf diese Weise Überspannungen verhindert, die Elektronik geschützt und/oder der Motor gebremst werden kann/können.

Diese Maßnahme(n) (Abschaltung und/oder Phasenkurzschluss) sind auch unabhängig von anderen Aspekten der vorliegenden Erfindung vorteilhaft und kann/können auch unabhängig realisiert werden. Insbesondere sind sie grundsätzlich auch allgemein bei einem Betrieb, insbesondere von BLDC- und/oder PMSM-Motoren, im zweiten Feldschwächbereich vorteilhaft oder ermöglichen einen erweiterten sicheren Betrieb im zweiten Feldschwächbereich.

Die Maßnahmen und insbesondere die synergistische Kombination aus der Fehlerstromerkennung, der Stromabschaltung und dem Phasenkurzschluss haben sich jedoch als besonders hilfreich bei der vorliegenden Anwendung in Zusammenhang mit Küchenmaschinen erwiesen, wobei der Elektromotor weit in den zweiten Feldschwächbereich hinein betrieben wird. Im Ergebnis ist ein Betrieb des Elektromotors am oder im Grenzbereich möglich und die beschriebene Fehlerbehandlung ist hier vorteilhaft für einen dauerhaft sicheren und zuverlässigen Betrieb.

Die unterschiedlichen Aspekte der vorliegenden Erfindung können einzeln realisiert werden, sind jedoch besonders vorteilhaft in Kombination.

Zu besonders vorteilhaften Kombinationen zählt insbesondere der Betrieb eines BLDC- und/oder PMSM-Motors im zweiten Feldschwächbereich zum Direktantrieb des Rührers einer Küchenmaschine und die vorschlagsgemäße Küchenmaschine, die mit dem Motorregler und einer Benutzerschnittstelle zur Konfiguration des Motorreglers durch Vorgabe von Drehzahlen, Programmen, Rezepten und dergleichen dazu ausgebildet ist, mit dem Elektromotor zum Direktantrieb des Rührers im zweiten Feldschwächbereich betrieben zu werden.

Weitere besonders vorteilhafte Kombinationen sind die Regelung des Elektromotors bzw. der Motorregler mit einer Regelcharakteristik, die auf einem geschlossenen funktionalen Zusammenhang zwischen Eingangsgrößen (Sensorwerten) und Ausgangsgrößen (Steuersignale für den Wechselrichter / Motorbrücke) basiert, bei einem BLDC- und/oder PMSM-Motor, der im zweiten Feldschwächbereich betrieben wird und insbesondere beim Einsatz in oder als Teil von Küchenmaschinen.

Denn der zweite Feldschwächbereich wird erst bei hohen Drehzahlen erreicht, nachdem der Ankerstellbereich und der erste Feldschwächbereich durchlaufen sind. Durch die Übergänge zwischen dem Ankerstellbereich, dem ersten Feldschwächbereich und dem zweiten Feldschwächbereich, in denen jeweils unterschiedliche Regelverfahren angewandt werden müssen, ist der kontinuierliche Übergang unter Vermeidung abrupter Übergänge bzw. Sprünge besonders vorteilhaft.

Ein weiterer Aspekt der vorliegenden Erfindung, der auch unabhängig realisiert werden kann, betrifft eine Küchenmaschine aufweisend einen Rührer und einen elektronisch kommutierten Elektromotor zum bevorzugt direkten Antrieb des Rührers, wobei der Küchenmaschinenantrieb einen Motorregler zur Regelung des Elektromotors aufweist. Die Küchenmaschine, der Antrieb bzw. die Motorsteuerung sind hierbei in vorteilhafter Weise dazu ausgebildet, das vorschlagsgemäße Verfahren durchzuführen.

Durch Ausbildung zur Durchführung des vorschlagsgemäßen Verfahrens werden bei der Küchenmaschine entsprechende Vorteile erreicht. Die Küchenmaschine kann also insbesondere auch mit hohen Drehzahlen einen erweiterten Anwendungsbereich haben, durch eine kompakte Motorkonstruktion ebenfalls kompakt, leicht und materialsparend hergestellt werden und sowohl sicher als auch leise betrieben werden.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in unterschiedlicher Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine perspektivische Ansicht eines vorschlagsgemäßen Elektromotors;
- Fig. 2: ein Ersatzschaltbild des Elektromotors gemäß Fig. 1;
- Fig. 3: ein Ersatzschaltbild des Elektromotors gemäß Fig. 1 im zweiten Feldschwächbereich;
- Fig. 4: einen Spannungsverlauf der Phasenspannungen des Elektromotors im Ankerstellbereich;
- Fig. 5: einen Stromverlauf der Phasenströme des Elektromotors im Ankerstellbereich
- Fig. 6: einen Spannungsverlauf der Phasenspannungen des Elektromotors im ersten Feldschwächbereich;
- Fig. 7: einen Stromverlauf der Phasenströme des Elektromotors im ersten Feldschwächbereich;
- Fig. 8: einen Stromverlauf der Phasenströme des Elektromotors im zweiten Feldschwächbereich;
- Fig. 9: einen Spannungsverlauf der Phasenspannungen des Elektromotors im zweiten Feldschwächbereich;
- Fig. 10: einen Sektorabschnitt eines Rotors des vorschlagsgemäßen Elektromotors mit bevorzugter Krümmungskontur (links) verglichen mit einer üblichen zylindrischen Kontur (rechts); und
- Fig. 11: eine vorschlagsgemäße Küchenmaschine.

In den Figuren werden für dieselben oder ähnliche Teile dieselben oder ähnliche Bezugszeichen verwendet, wobei dieselben oder ähnliche Vorteile und Eigenschaften erreicht werden können, auch wenn von einer wiederholten Beschreibung abgesehen wird.

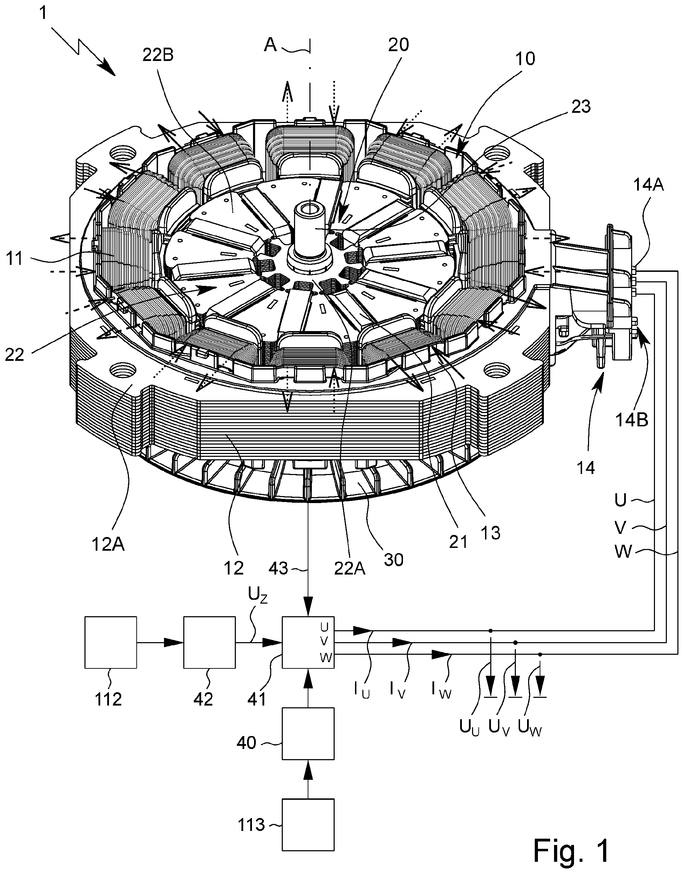

Fig. 1 zeigt einen vorschlagsgemäßen Elektromotor 1 in einer schematischen, perspektivischen Darstellung.

Im Folgenden wird bezugnehmend auf Fig. 1 zunächst der grundsätzliche Aufbau eines besonders bevorzugten Elektromotors 1 erläutert, der sich als vorteilhaft zum Antrieb von Küchenmaschinen 100, insbesondere mit einem oder mehreren der und besonders einer Kombination von Aspekten der vorliegenden Erfindung gezeigt hat.

Bei der dargestellten Ausführungsform ist der Elektromotor 1 als bürstenloser Gleichstrommotor (BLDC-Motor) bzw. Permanentmagnet-Synchronmotor (PMSM-Motor) ausgebildet. Es sind jedoch grundsätzlich auch andere Lösungen möglich.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Begriffe wie "axial", "radial" und dergleichen beziehen sich vorzugsweise auf die Rotationsachse A.

Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet.

Der Stator 10 weist mehrere, hier zwölf, Wicklungen/Spulen 11, einen Statorkern 12, einen Spulenträger 13 und/oder eine Anschlusseinrichtung 14 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte, wobei jede Wicklung/Spule 11 um einen Spulenabschnitt/Statorzahn gewickelt ist und/oder sich jeweils ein Spulenabschnitt/Statorzahn durch eine Spule 11 hindurch erstreckt.

Jede Spule 11 weist vorzugsweise mindestens 140, insbesondere mindestens 150 Windungen und/oder höchstens 200, insbesondere höchstens 190 Windungen auf, besonders bevorzugt etwa 170 Windungen. Entsprechend ist vorzugsweise jeder Spulenabschnitt/Statorzahn mindestens 140 mal, insbesondere mindestens 150 mal und/oder höchstens 200 mal, insbesondere höchstens 190 mal, besonders bevorzugt etwa 170 mal, umwickelt.

Der Spulendraht, aus dem die Spulen 11 gebildet bzw. gewickelt sind, ist vorzugsweise aus Kupfer.

Der Spulendraht weist vorzugsweise einen Blankdrahtdurchmesser von mindestens 0,2 mm und/oder höchstens 0,6 mm auf, besonders bevorzugt von etwa 0,4 mm.

Der Spulendraht hat vorzugsweise ein Gesamtgewicht von mehr als 100 g, insbesondere mehr als 150 g, und/oder weniger als 300 g, insbesondere weniger als 250 g, besonders bevorzugt von etwa 200 g.

Beim Darstellungsbeispiel sind vorzugsweise jeweils vier Spulen 11 aus dem gleichen Spulendraht gewickelt, insbesondere zwei benachbarte Spulen 11 und deren jeweils gegenüberliegenden Spulen 11. Die zwölf Spulen 11 des Darstellungsbeispiels lassen sich also vorzugsweise in drei Gruppen einteilen, die insbesondere separat ansteuerbar sind. Es handelt sich vorzugsweise um einen dreiphasigen Elektromotor 1. Generell sind jedoch auch andere Lösungen möglich.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden, insbesondere wie in Fig. 1 mit Pfeilen an den Spulen 11 angedeutet.

Die Anschlusseinrichtung 14 weist vorzugsweise einen elektrischen Anschluss bzw. elektrische Anschlusskontakte 14A auf. Die Anschlusseinrichtung 14 weist im Darstellungsbeispiel jeweils ein Anschlusskontakt 14A für Phasen U, V, W auf, korrespondierend zu den Phasen U, V, W.

Vorzugsweise sind die Spulen 11 so miteinander verschaltet, dass pro Phase U, V, W jeweils eine Spulengruppe gebildet wird. Beim Darstellungsbeispiel bzw. dreiphasig betriebenen Elektromotor 1 werden also vorzugsweise drei Spulengruppen korrespondierend zu den drei Phasen U, V, W gebildet. Insbesondere sind beim Darstellungsbeispiel mit zwölf Spulen 11 jeweils vier Spulen 11 einer Phase U, V, W zugeordnet. Dies ist mittels der unterschiedlichen Pfeile (z.B. durchgezogenen Pfeile für Phase U, gestrichelten Pfeile für Phase V und gepunktete Pfeile für Phase W) an den Spulen 11 in Fig. 1 angedeutet.

Zu den jeweiligen Phasen U, V, W korrespondieren Phasenströme I_{U}, I_{V}, I_{W} und Phasenspannungen Uu, Uv, Uw, wobei die Phasenströme I_{U}, I_{V}, I_{W} vorzugsweise mit Shunts an den Anschlusskontakten 14A messbar sind und Phasenspannungen Uu, Uv, Uw an den Anschlusskontakten 14A abgegriffen werden können.

Die elektrischen Anschlusskontakte 14A sind vorzugsweise durch eine oder mehrere Klemmen, insbesondere Schneidklemmen, gebildet oder weisen diese auf.

An jeden Kontakt 14A bzw. jede Klemme kann vorzugsweise eine unterschiedliche Spannung angelegt werden, insbesondere so dass die verschiedenen Spulendrähte und zugehörigen Spulen 11 unterschiedlich angesteuert werden können.

Die Anzahl der Kontakte 14A bzw. Klemmen kann je nach Anzahl der verschiedenen Spulendrähte und/oder abhängig von der Verschaltung der Spulendrähte bzw. der Spulen 11 variieren. Beim Darstellungsbeispiel weist die Anschlusseinrichtung 14 vorzugsweise drei elektrische Anschlusskontakte 14A bzw. Klemmen auf.

Vorzugsweise weist die Anschlusseinrichtung 14 einen Sternpunkt 14B der Verschaltung der Spulendrähte bzw. der Spulen 11 auf. Insbesondere sind die Spulen 11 in einer Sternschaltung miteinander verschaltet. Hierunter ist vorzugsweise zu verstehen, dass die unterschiedlichen Spulendrähte der unterschiedlichen (Gruppen von) Spulen 11, insbesondere an Enden der Spulendrähte, miteinander verbunden sind.

Vorzugsweise bildet jeder Spulendraht mit seinem einen Ende einen elektrischen Anschlusskontakt 14A bzw. ist mit einer entsprechenden Klemme elektrisch verbunden und ist mit seinem anderen Ende zum Sternpunkt 14B verbunden.

Beim Darstellungsbeispiel werden vorzugsweise drei (Enden der) Spulendrähte zu einem Sternpunkt 14B miteinander verschaltet.

Die Anschlusseinrichtung 14 weist vorzugsweise, insbesondere zusätzlich zu der/den Klemme(n) für die Anschlusskontakte 14A, eine weitere Klemme, insbesondere eine Schneidklemme, zur Bildung des Sternpunkts 14B auf.

Alternativ zur Klemme kann der Sternpunkt 14B auch dadurch gebildet werden, dass die entsprechenden Enden der Spulendrähte miteinander verlötet oder verschweißt oder anderweitig miteinander elektrisch verbunden werden.

Beim Darstellungsbeispiel weist der Rotor 20 vorzugsweise mehrere, hier zehn, Permanentmagnete 21, einen Rotorkern 22, eine Welle 23 und/oder einen Lüfter 30, insbesondere ein Lüfterrad, auf.

Die Permanentmagnete 21 sind vorzugsweise zumindest im Wesentlichen quaderförmig ausgebildet. An ihren Kanten können die Permanentmagnete 21 abgerundet sein und/oder Einführschrägen aufweisen.

Vorzugsweise sind die Permanentmagnete 21 flach ausgebildet bzw. weisen jeweils zwei gegenüberliegende Flachseiten auf.

Die Flachseiten sind bevorzugt zumindest im Wesentlichen quadratisch ausgebildet, können jedoch auch, je nach Höhe des Rotorkerns 22, rechteckig sein.

Die Flachseiten haben vorzugsweise jeweils einen Flächeninhalt von mehr als 4 cm², insbesondere von mehr als 4,5 cm² und/oder von weniger als 5 cm².

Die Längserstreckung der Permanentmagnete 21 bzw. die Seitenlängen der Flachseiten beträgt/betragen vorzugweise jeweils mindestens das Doppelte oder Dreifache, besonders bevorzugt etwa das Vierfache, von der jeweiligen Dicke/Breite der Permanentmagnete 21.

Die Seitenlängen der Flachseiten sind vorzugweise länger als 15 mm, insbesondere länger als 20 mm, und/oder kürzer als 30 mm, insbesondere kürzer als 25 mm. Besonders bevorzugt betragen beide Seitenlängen der Flachseiten etwa 22 mm.

Die Dicke/Breite der Permanentmagnete 21 beträgt vorzugsweise jeweils mehr als 3 mm und/oder weniger als 7 mm, besonders bevorzugt zwischen 4 und 6,5 mm, insbesondere etwa 5,6 mm.

Vorzugsweise sind die Permanentmagnete 21 in Richtung ihrer Dicke/Breite bzw. in die Richtung orthogonal zu den Flachseiten polarisiert und/oder bilden die zwei Flachseiten eines Permanentmagneten 21 unterschiedliche Pole. Man spricht hierbei von diametraler Magnetisierung.

Bei den Permanentmagneten 21 handelt es sich bevorzugt um Ferritmagnete und/oder die Permanentmagnete 21 sind vorzugsweise aus Hartferrit hergestellt.

Die Permanentmagnete 21 haben vorzugsweise (jeweils) eine Remanenzflussdichte größer als 400 mT, insbesondere größer als 410 mT, und/oder kleiner als 450 mT, insbesondere kleiner als 420 mT. Besonders bevorzugt liegt die Remanenzflussdichte zwischen 412.5 mT und 427.5 mT.

Die Permanentmagnete 21 haben vorzugsweise (jeweils) eine Koerzitivfeldstärke der magnetischen Polarisation von mindestens 200 oder 250 kA/m, besonders bevorzugt von mindestens 300 kA/m oder mehr.

Die Permanentmagnete 21 haben vorzugsweise (jeweils) ein (maximales) Energieprodukt von mindestens 20, 25 oder 30 kJ/m³, besonders bevorzugt von mindestens 32 kJ/m³ oder mehr.

Die Permanentmagnete 21 haben vorzugsweise (jeweils) eine Oberflächenspannung von mindestens 20, 25 oder 30 mNm, besonders bevorzugt von mindestens 32 mNm oder mehr.

Die Permanentmagnete 21 sind vorzugsweise im Rotorkern 22 angeordnet bzw. eingebettet.

Die Permanentmagnete 21 sind vorzugsweise so im Rotor 20 bzw. Rotorkern 22 angeordnet, dass sie in Umfangsrichtung - bezogen auf die Welle 23 bzw. Rotationsachse A - polarisiert sind und/oder dass die Flächennormalen ihrer Flachseiten in Umfangsrichtung zeigen.

Die Permanentmagnete 21 sind vorzugweise sternförmig im Rotor 20 bzw. Rotorkern 22 und/oder um die Welle 23 bzw. Rotationsachse A herum angeordnet und/oder erstrecken sich bzw. haben eine Haupt-/Längserstreckung - bezogen auf die Welle 23 bzw. Rotationsachse A - in radialer Richtung.

Die Permanentmagnete 21 sind vorzugsweise gleichmäßig über einen Kreisumfang verteilt. Benachbarte Permanentmagnete 21 schließen also vorzugsweise einen Winkel von 360° geteilt durch die Anzahl der Permanentmagnete 21 ein.

Die Permanentmagnete 21 sind vorzugsweise derart angeordnet, dass die einander zugewandten Pole bzw. Flachseiten zweier benachbarter Permanentmagnete 21 die gleiche Polarität aufweisen, so dass der zwischen den Polen bzw. Flachseiten angeordnete Teil bzw. Sektorabschnitt 22B des Rotorkerns 22 entsprechend polarisiert ist bzw. einen entsprechenden Pol des Rotorkerns 22 bildet. Mit anderen Worten sind zwei benachbarte Permanentmagnete 21 vorzugsweise in entgegengesetzte Richtungen polarisiert.

Grundsätzlich können die Permanentmagnete 21 jedoch auch anders als im Darstellungsbeispiel geformt, polarisiert und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Der Rotorkern 22 umfasst vorzugsweise mehrere, hier zehn, Sektorsegmente bzw. Sektorabschnitte 22B, wobei zwischen zwei benachbarten Sektorabschnitten 22B jeweils ein Permanentmagnet 21 aufgenommen ist. Insbesondere sind die Permanentmagnete 21 seitlich bzw. in Umfangsrichtung jeweils von zwei Sektorabschnitten 22B begrenzt.

Die Sektorabschnitte 22B sind vorzugsweise jeweils keilförmig bzw. tortenstückförmig ausgebildet und/oder haben vorzugsweise jeweils einen Querschnitt (orthogonal zur Rotationsachse A) in Form eines Kreissektors und/oder zumindest im Wesentlichen eines Dreiecks.

Die Sektorabschnitte 22B sind vorzugsweise zylinder-bzw. prismenförmig, insbesondere mit zumindest im Wesentlichen kreissegmentförmiger Grundfläche bzw. kreissegmentförmigem Querschnitt.

Durch die Permanentmagnete 21 werden bzw. sind die Sektorabschnitte 22B magnetisiert bzw. polarisiert, insbesondere wobei die Sektorabschnitte 22B alternierend Nord- und Südpole bilden.

Die Permanentmagnete 21 und/oder Sektorabschnitte 22B sind vorzugsweise gleichmäßig über einen Kreisumfang verteilt. Benachbarte Permanentmagnete 21 schließen also vorzugsweise einen Winkel von 360° geteilt durch die Anzahl der Permanentmagnete 21 ein. Entsprechendes gilt für die Sektorabschnitte 22B.

Vorzugsweise umfasst der Rotorkern 22 mehrere gestapelte Elektrobleche bzw. Rotorbleche 22A oder ist daraus gebildet. Die Rotorbleche 22A sind entsprechend geformt bzw. gestanzt, um die Sektorabschnitte 22B des Rotorkerns 22 zu realisieren.

Der Lüfter 30 ist vorzugsweise an der Welle 23 befestigt, insbesondere kraft-, formund/oder stoffschlüssig. Zusätzlich oder alternativ kann der Lüfter 30 an dem Rotorkern 22 befestigt sein, insbesondere kraft-, form- und/oder stoffschlüssig. Auch ist es möglich, dass der Lüfter 30 an den Rotorkern 22 und/oder die Welle 23 angespritzt ist.

Vorzugsweise ist der Lüfter 30 aus Kunststoff hergestellt und/oder einstückig gebildet, insbesondere spritzgegossen.

Der Lüfter 30 ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse des Lüfters 30.

Der Lüfter 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert das Lüfterrad 30 bei Betrieb des Elektromotors 1 um die Rotationsachse A und kann so entsprechend Luft fördern.

Der Lüfter 30 kann, insbesondere einstückig mit dem Lüfter 30 gebildete, Fixierelemente (nicht dargestellt) aufweisen, die die Permanentmagnete 21 im Rotorkern 22 fixieren bzw. klemmen. Zusätzlich oder alternativ können die Permanentmagnete 21 auch mit dem Rotorkern verklebt sein und/oder durch andere, nicht vom Lüfter 30 gebildete Fixierelemente befestigt sein.

In Fig. 1 sind am Elektromotor 1 mit Pfeilen den Phasen U, V, W zugeordnete Phasenströme I_{U}, I_{V}, I_{W} angedeutet. Der Elektromotor 1 im Darstellungsbeispiel wird dreiphasig betrieben. Dies ist bevorzugt, jedoch nicht zwingend der Fall. Insbesondere kann der Elektromotor 1 auch einphasig oder mit mehr Phasen betreibbar sein oder betrieben werden.

Der Elektromotor 1 kann mit einem Motorregler 40 geregelt sein oder werden. Im Darstellungsbeispiel steuert der Motorregler 40 einen Wechselrichter 41 oder weist den Wechselrichter 41 auf, mit dem der Elektromotor 1 elektrisch verbunden ist und/oder versorgt wird.

Der Wechselrichter 41 stellt an den Phasen U, V, W Phasenströme I_{U}, I_{V}, I_{W} und Phasenspannungen Uu, Uv, Uw zum Betrieb des Elektromotors 1 bereit. Es versteht sich, dass Phasenströme I_{U}, I_{V}, I_{W} und Strangströme ineinander umgerechnet werden können. Diese Begriffe sind daher synonym zu verstehen und können durch einander ersetzt werden, wobei im Folgenden der Übersichtlichkeit halber von Phasenströmen I_{U}, I_{V}, I_{W} die Rede ist.

Der Wechselrichter 41 wird vorzugsweise mit einer Betriebsspannung versorgt und wandelt diese, gesteuert durch den Motorregler 40, in die Phasenströme I_{U}, I_{V}, I_{W} und Phasenspannungen Uu, Uv, Uw. Die Betriebsspannung ist vorzugsweise eine Gleichspannung. Die Betriebsspannung, auch Zwischenkreisspannung Uz genannt, wird vorzugsweise über eine Power Factor Correction 42 bereitgestellt, die eine Netzspannung in eine Gleichspannung wandelt.

Die Power Factor Correction (PFC) 42 kann einerseits die Blindleistung reduzieren und andererseits dafür sorgen, dass die Stromaufnahme möglichst sinusförmig ist. Dies verbessert die Effizienz, reduziert Netzverluste und erfüllt gesetzliche Vorgaben zur Netzqualität. Insbesondere handelt es sich um eine aktive PFC-Schaltung, da diese besonders effektiv und anpassungsfähig sind.

Die Betriebsspannung kann auch mittels eines Gleichrichters o. dgl. aus einer Notspannung gewandelt sein oder werden oder auch von einem Akumulator oder sonstigen Energiespeicher stammen.

Der Motorregler 40 greift vom Elektromotor 1 vorzugsweise ein oder mehrere Sensorsignale 43 ab und regelt die Phasenströme I_{U}, I_{V}, I_{W} und Phasenspannungen Uu, Uv, Uw auf dieser Basis.

Bei dem Sensorsignal 43 handelt es sich beispielsweise um die Rotorposition bzw. Sensorwerte, die mit einem oder mehreren Encodern, Resolvern, Hall-Sensoren oder anderen Sensoren des Elektromotors 1 gebildet werden oder sind. Alternativ oder zusätzlich handelt es sich um Sensorwerte bezogen auf die Phasen U, V, W (Spannungsmessergebnisse und/oder Strommessergebnisse, insbesondere ermittelt per Shuntmessung der Phasen U, V, W).

Das Sensorsignal 43 kann insbesondere eine absolute Rotorposition, einen oder mehrere Strangströme, eine Zwischenkreisspannung Uz und/oder eine Motortemperatur repräsentieren und/oder die Regelung mit dem Motorregler 40 basiert auf einem oder mehreren dieser. Der Motorregler 40 synchronisiert die Phasenströme I_{U}, I_{V}, I_{W} und Phasenspannungen Uu, Uv, Uw vorzugsweise mit dem Sensorsignal 43.

Bei der Regelung kann der Motorregler 40 Parameter wie ein Massenträgheitsmoment, Spulenwiderstände, Induktivitäten und/oder eine Flussverkettung der Permanentmagnete 21 zugrunde legen oder berücksichtigen oder er ist dazu ausgebildet.

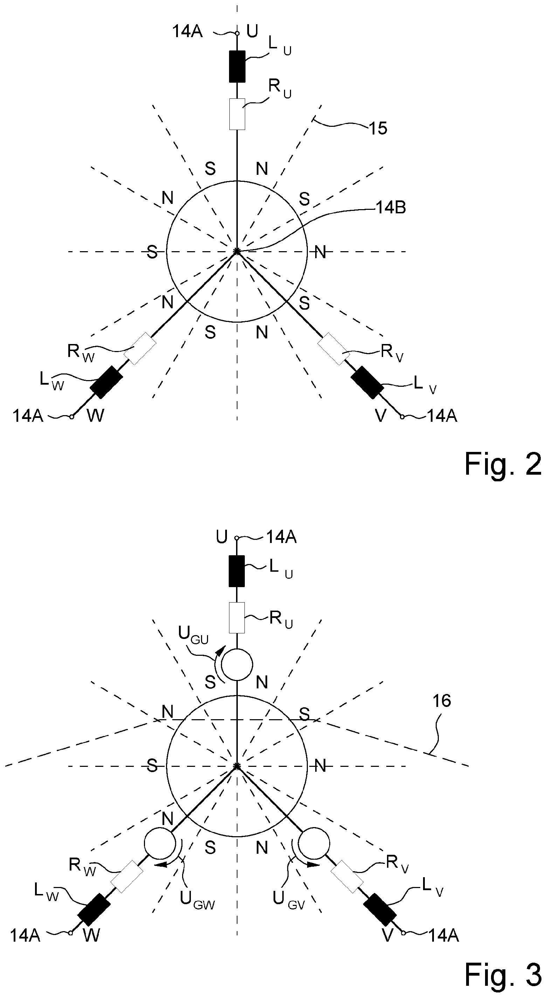

In Fig. 2 ist ein Ersatzschaltbild des dreiphasig betriebenen Elektromotors 1 gemäß Fig. 1 für den Ankerstellbereich dargestellt. Statorschlitze 15 sind als gestrichelte Linien angedeutet, Rotorpolarisationen sind als Nordpole N und Südpole S eingezeichnet. Wicklungswiderstände Ru, Rv, Rw und Wicklungsinduktivitäten Lu, Lv, Lw sind durch Ersatzschaltbildelemente repräsentiert.

In Fig. 3 ist das Ersatzschaltbild des dreiphasig betriebenen Elektromotors 1 gemäß Fig. 1 für den, insbesondere zweiten, Feldschwächbereich darstellt. In diesem ist verglichen mit dem einfacheren Ersatzschaltbild gem. Fig. 2 eine zusätzliche gestrichelte Linie eingezeichnet, die eine zusätzliche Spannungskomponente 16 repräsentiert, die durch eine Feldschwächungsregelung des Motorreglers 40 eingebracht wird. Die Spannungskomponente 16 ist dazu ausgebildet, um die Gegen-EMK (elektromotorische Kraft) zu kompensieren und damit den Motorbetrieb bei sehr hohen Drehzahlen zu ermöglichen. Die Gegen-EMK ist im Ersatzschaltbild durch Spannungsquellen korrespondierender Gegen-EMK-Spannungen U_{GU}, U_{GV}, U_{GW} repräsentiert. Die Spannungskomponente 16 kann einer oder mehreren der Phasenspannungen Uu, Uv, Uw überlagert sein bzw. einen Teil dieser bilden.

Der Elektromotor 1 wird vorzugweise im Feldschwächbereich und insbesondere auch im zweiten Feldschwächbereich betrieben.

Die Feldschwächung dient vorzugsweise dem Aufbau eines Gegenfeldes bezogen auf die Magnetisierungsrichtung der Permanentmagnete 21. Das Gegenfeld schwächt das resultierende Rotorfeld mit dem Ziel, die in den Statorspulen 11 induzierten Spannungen zu reduzieren.

Im ersten Feldschwächbereich ist das resultierende magnetische Feld des Rotors 20 noch signifikant von null verschieden. Im zweiten Feldschwächbereich überkompensiert das Gegenfeld das Magnetfeld der Permanentmagnete 21, was zu einer Umkehr der ursprünglichen Feldrichtung führt.

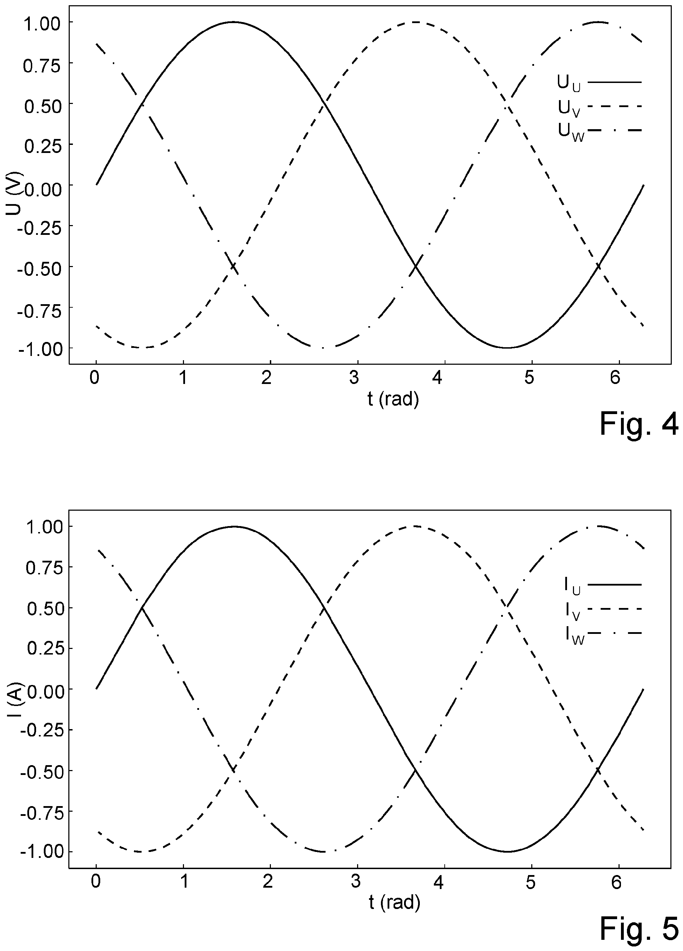

In den Fig. 4 bis Fig. 9 sind vereinfachte Beispiele von Phasenspannungen Uu, Uv, Uw - wobei die Verläufe auf eine maximale bzw. halbe Zwischenkreisspannung Uz von 1 V normiert sind - und von korrespondierenden Phasenströmen I_{U}, I_{V}, I_{W} - wobei die Verläufe auf einen maximalen Strom bzw. Nennstromaufnahme auf 1 A normiert ist - im Ankerstellbereich, im ersten Feldschwächbereich und im zweiten Feldschwächbereich über dem Drehwinkel des Rotors in Radiant (rad) dargestellt.

Um die absoluten Werte für Ströme und Spannungen zu berechnen, können die Verläufe mit entsprechenden Maximalwerten anhand der technischen Spezifikationen des Elektromotors 1 oder Wechselrichters 41 (z. B. Nennstrom, Betriebsspannung, Zwischenkreisspannung Uz) skaliert werden. Es ist jeweils eine Periode (2 Pi entspricht 360 Grad) abgebildet, die einer Umdrehung des Elektromotors 1 entspricht. Der Winkel kann bedarfsweise über eine Frequenz, die der Drehzahl in Umdrehungen pro Minute entspricht, in eine Absolut-Zeit umgerechnet werden.

Für den Ankerstellbereich sind in Fig. 4 beispielhafte Phasenspannungen Uu, Uv, Uw und In Fig. 5 korrespondierende Phasenströme I_{U}, I_{V}, I_{W} dargestellt. Im Ankerstellbereich (Grundbereich) wird der Elektromotor 1 mit voller (Zwischenkreis-)Spannung (vorzugsweise mit Verläufen der Phasenspannungen Uu, Uv, Uw, die zwischen den Phasen um 120 Grad zueinander verschoben sind) betrieben, ohne dass eine Feldschwächung notwendig ist. Sie sind durch die Betriebsspannung des Wechselrichters 41 begrenzt bzw. vorgegeben. Die maximale Drehzahl im Ankerstellbereich wird durch die Nenndrehzahl des Elektromotors 1 begrenzt. Bis zu dieser Drehzahl bleibt das Drehmoment konstant.

Für den vorschlagsgemäßen Elektromotor 1 bzw. die vorschlagsgemäße Küchenmaschine 100 ist die Nenndrehzahl vorzugsweise größer als 1000 U/min, insbesondere größer als 1500 U/min, und/oder vorzugsweise kleiner als 3000 U/min, insbesondere kleiner als 2500 U/min.

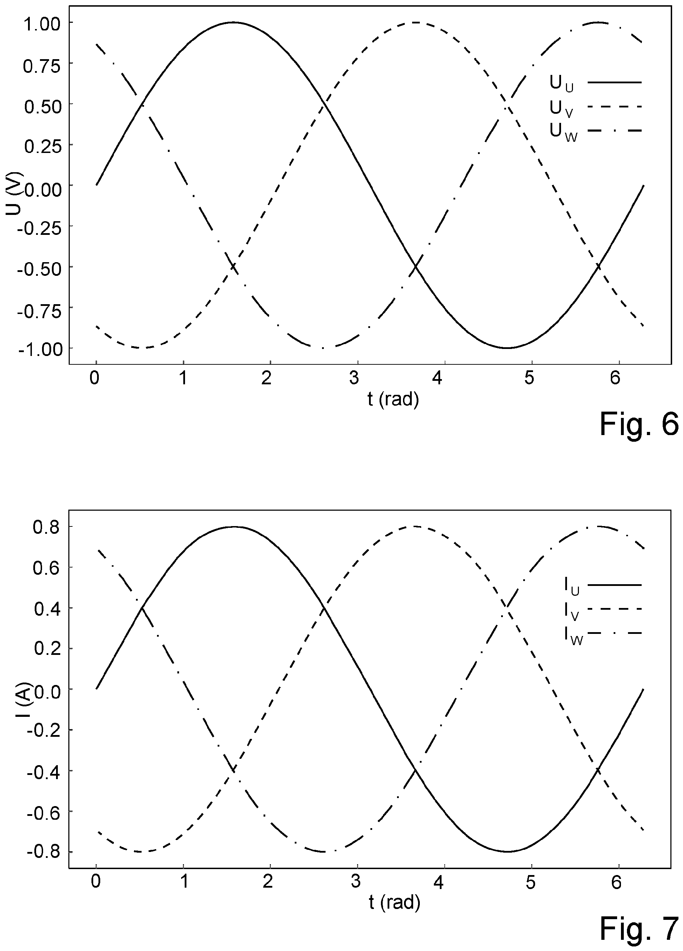

Für den ersten Feldschwächbereich sind in Fig. 6 beispielhafte Phasenspannungen Uu, Uv, Uw und In Fig. 7 korrespondierende Phasenströme I_{U}, I_{V}, I_{W} dargestellt. Im ersten Feldschwächbereich wird eine Feldschwächung eingesetzt, um Drehzahlen über die Nenndrehzahl hinaus zu erreichen, indem der magnetische Fluss gezielt reduziert wird. Die Phasenspannungen Uu, Uv, Uw bleiben dabei zumindest im Wesentlichen gegenüber dem Ankerstellbereich unverändert. Das Drehmoment sinkt mit zunehmender Drehzahl, da der Winkel zwischen magnetischem Fluss und Stromverlauf vergrößert wird oder ist. Eine maximale Drehzahl im ersten Feldschwächbereich liegt typischerweise bei etwa dem 1,5- bis 2-fachen der Nenndrehzahl.

Für den vorschlagsgemäßen Elektromotor 1 bzw. die vorschlagsgemäße Küchenmaschine 100 ist die Drehzahl am Übergang vom ersten in den zweiten Feldschwächbereich (maximale Drehzahl im ersten Feldschwächbereich) vorzugsweise größer als 5000 U/min oder 6000 U/min, insbesondere größer als 7000 U/min, und/oder vorzugsweise kleiner als 10000 U/min, insbesondere kleiner als 9000 U/min.

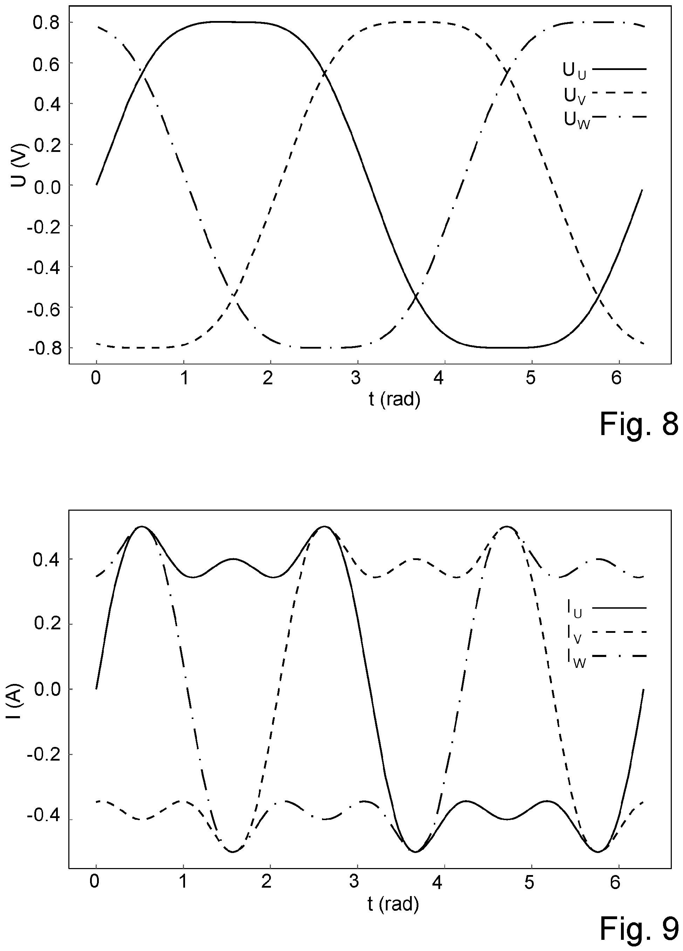

Für den zweiten Feldschwächbereich sind in Fig. 8 beispielhafte Phasenspannungen Uu, Uv, Uw und In Fig. 9 korrespondierende Phasenströme I_{U}, I_{V}, I_{W} dargestellt. Im zweiten Feldschwächbereich sind die Amplituden der Phasenströme I_{U}, I_{V}, I_{W} gegenüber dem Betrieb im Ankerstellbereich oder ersten Feldschwächbereich vorzugsweise deutlich reduziert. Dies dient der Begrenzung thermischer Verluste und der Vermeidung einer Überlastung des Elektromotors 1 und Wechselrichters 41.

Die Phasenströme I_{U}, I_{V}, I_{W} sind im Darstellungsbeispiel nicht mehr perfekt sinusförmig, sondern weisen durch die Regelung Harmonische auf. Insbesondere weisen die Phasenströme I_{U}, I_{V}, I_{W} eine dritte Harmonische auf, die bei asymmetrischen Spannungsmodulationen verstärkt ist. Zudem enthält der beispielhafte Verlauf fünfte und siebte Harmonische. Diese treten durch die Interaktion von Stromwinkelverschiebung und höherer Schaltfrequenz auf. Die Verzerrungen entstehen durch die aktive Kompensation der Gegen-EMK und ggf. durch die unvollständige Modulation der Phasenspannungen Uu, Uv, Uw bei hohen Drehzahlen. Es können leichte Asymmetrien zwischen den Phasen auftreten, da die Regelung zunehmend nicht-linearen Einflüssen des Motors und der Elektronik ausgesetzt ist.

Die Phasenspannungen Uu, Uv, Uw im zweiten Feldschwächbereich geraten ins Clipping, wenn die maximal verfügbare Betriebsspannung des Wechselrichters nicht mehr ausreicht, um die gewünschten sinusförmigen Verläufe vollständig abzubilden. Dies ist eine direkte Folge der begrenzten Zwischenkreisspannung Uz des Systems und der hohen Gegen-EMK des Elektromotors 1 bei sehr hohen Drehzahlen.

Im zweiten Feldschwächbereich wird die Gegen-EMK so hoch, dass sie fast die gesamte verfügbare Phasenspannung Uu, Uv, Uw kompensiert. Eine weitere Erhöhung der Phasenspannung Uu, Uv, Uw ist durch die Betriebsspannungsgrenze des Zwischenkreises nicht möglich. Die Spannungen weisen ggf. Verzerrungen durch hochfrequente Schaltvorgänge auf. Diese entstehen durch die Pulsweitenmodulation (PWM), die versucht, die verfügbare Spannungszeitfläche maximal auszunutzen. Diese Verzerrungen beeinflussen die Stromverläufe und tragen zur Abflachung und Asymmetrie der Ströme bei.

Um den Elektromotor 1 vorschlagsgemäß im zweiten Feldschwächbereich zu betreiben, kann der Motorregler 40 eine oder mehrere der folgenden Maßnahmen bewirken oder dazu ausgebildet sein:
1. Aktive Stromwinkelsteuerung:
   Der Stromwinkel zwischen der Spannung und der Gegen-EMK wird vorzugsweise bewusst verschoben:
   Die d-Komponente der Phasenströme I_{U}, I_{V}, I_{W} wird vorzugsweise negativ geregelt, um den Rotorfluss zu schwächen und die Gegen-EMK zu reduzieren.
   Die q-Komponente der Phasenströme I_{U}, I_{V}, I_{W} bleibt für die Drehmomentbildung verantwortlich, wird aber vorzugsweise in ihrer Amplitude verringert.
2. Einsatz von Pulsweitenmodulation (PWM):
   Die PWM wird zur Bildung des Wechselrichters 41 bzw. zur Bildung der Phasenspannungen Uu, Uv, Uw vorzugsweise so angepasst, dass die Spannungszeitfläche bei jeder Phase U, V, W maximiert wird:
   Der Motorregler 40 moduliert vorzugsweise die Phasenspannungen Uu, Uv, Uw so, dass die Gegen-EMK überwunden und der Stromfluss aufrechterhalten wird.
3. Kompensation der Gegen-EMK:
   Da die Gegen-EMK bei hohen Drehzahlen die Betriebsspannung bzw. Zwischenkreisspannung Uz erreicht oder überschreitet, werden die Phasenströme I_{U}, I_{V}, I_{W} durch die Motorsteuerung 40 vorzugsweise aktiv so gesteuert, dass die Phasenströme I_{U}, I_{V}, I_{W} entgegen der Gegen-EMK wirken. Hierbei kompensiert der Motorregler 40 vorzugsweise die Spannungssättigung der Phasenspannungen Uu, Uv, Uw, was zu verzerrten Stromverläufen führen kann.
4. Erhöhung der Schaltfrequenz:
   Um die Stromregelung bei hohen Drehzahlen aufrechtzuerhalten, kann die Motorsteuerung 40 die Schaltfrequenz des Wechselrichters 41 erhöhen. Der Motorregler 40 bewirkt also vorzugsweise eine hochfrequentere Schaltregelung des Wechselrichters 41 im Vergleich zum Ankerstellbereich bzw. ersten Feldschwächbereich. Dies reduziert die Rippelströme. Es können zusätzliche Harmonische durch die Interaktion zwischen Schaltfrequenz und Motorinduktivität resultieren.
5. Begrenzung des Drehmoments:
   Die verfügbare Stromamplitude der Phasenströme I_{U}, I_{V}, I_{W} wird vorzugsweise reduziert, insbesondere um die thermischen und elektrischen Grenzen des Elektromotors 1 und Wechselrichters 41 einzuhalten. Dies führt zu einem sinkenden Drehmoment im zweiten Feldschwächbereich.
6. Thermische und elektrische Schutzmaßnahmen:
   Der Motorregler 40 überwacht vorzugsweise die Belastung des Elektromotors 1 und/oder Wechselrichters 41, um Schäden durch Überhitzung oder Überstrom zu verhindern.
7. Space Vector Modulation (SVM)
   Der Motorregler 40 kann zur Erzeugung von sinusförmigen Phasenspannungen Uu, Uv, Uw, anstatt direkt sinusförmige Signale zu erzeugen, sogenannte Space Vectors verwenden, die durch Kombination der Schaltzustände der Wechselrichtertransistoren gebildet werden.
   Der Wechselrichter 41 erzeugt diskrete Spannungsvektoren, die in einem d-q-Koordinatensystem dargestellt werden können. Diese Vektoren werden so kombiniert, dass annähernd sinusförmige Phasenspannungen Uu, Uv, Uw am Elektromotor 1 erzeugt werden. Die Pulsweitenmodulation (PWM) schaltet vorzugsweise zwischen den Vektoren, um die gewünschte Ausgangsspannung zu erreichen.
   Hierdurch können eine höhere Ausnutzung der Betriebsspannung des Wechselrichters bzw. der Zwischenkreisspannung Uz und eine Reduktion von Oberschwingungen und damit geringere Verluste im Elektromotor 1 sowie eine präzise Steuerung der Phasenströme I_{U}, I_{V}, I_{W} erreicht werden.
8. Trapezoidale Zero-Sequence
   Eine Zero-Sequence-Komponente, die den Kurven in Fig. 8 und Fig. 9 überlagert ist, ist die oder ein Teil der zusätzlichen Spannungskomponente 16, die vorzugsweise allen drei Phasen U, V, W gleichermaßen (im Gleichtakt) hinzugefügt wird. Bei einer "trapezoidalen" Zero-Sequence wird die Form der hinzugefügten Spannungskomponente 16 zumindest im Wesentlichen trapezförmig.
   Die Spannungskomponente 16 beeinflusst die Spannungsausnutzung des Wechselrichters 41. Sie verändert die Schaltzeiten der Wechselrichtertransistoren vorzugsweise so, dass die Phasenspannungen Uu, Uv, Uw in einem optimalen Bereich gehalten werden, ohne das Drehmoment oder den Fluss im Elektromotor 1 zu stören.
   Die trapezförmige Zero-Sequence wird verwendet, um die Spannungsausnutzung zu maximieren und gleichzeitig eine gleichmäßige Stromform in den Phasen U, V, W zu gewährleisten. Sie passt besonders gut zur Charakteristik des vorschlagsgemäß als BLDC- und/oder PMSM-Motor realisierten Elektromotors 1.

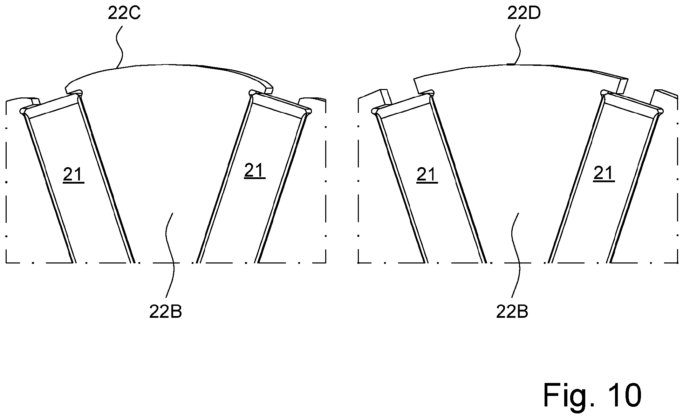

In Fig. 10 ist ein Sektorabschnitt 22B mit zwei der Permanentmagneten 21 des Rotors 20 dargestellt. Es ist bevorzugt, dass eine außenliegende Oberfläche 22C des Rotorkerns 22 bzw. des jeweiligen Sektorabschnitts 22B, die auch als dem Stator 10 gegenüberliegende Oberfläche oder äußere Kante bezeichnet werden kann, eine in Richtung der Permanentmagnete 21 zunehmende Krümmung aufweisen.

Insbesondere soll die Krümmung der außenliegenden Oberfläche 22C an einer invertierten Kosinuskontur orientiert sein (links abgebildet) im Vergleich zu einer sonst üblichen zylindrischen Kontur 22D (rechts abgebildet).

Die radiale Erstreckung des Rotorkerns 20 ist im Bereich der Permanentmagnete 21 im Vergleich zum Bereich in der Mitte zwischen den Permanentmagneten 21 reduziert, sodass sich ausgehend von dem mittigen Bereich des jeweiligen Sektorabschnitts 22B ein Kurvenradius der außenliegenden Oberfläche 22C ergibt, der in Richtung der Permanentmagnete 21 (kontinuierlich bzw. stetig) abnimmt. Die Krümmung der außenliegende Oberfläche 22C des Rotorkerns 22 nimmt hierbei vorzugsweise in Richtung der Permanentmagnete 21 zu.

Besonders bevorzugt weist die außenliegende Oberfläche 22C des Rotorkerns 22 des jeweiligen Sektorabschnitts 22B (in Tangentialrichtung) einen Verlauf auf, der an der Form eines invertierten Kosinus (bzw. an einem Verlauf von 1/cos(x)) orientiert ist.

Die außenliegende Oberfläche 22C mit invertierter Kosinuskontur bewirkt vorzugsweise, dass sich die radiale Flussdichtekomponente des Rotors 20 im Luftspalt nahezu sinusförmig mit der Ordnungszahl 5 bzw. Polpaarzahl ausprägt. Das Gleiche gilt für die rotatorisch induzierte Spannung.

Die vorschlagsgemäße außenliegende Oberfläche 22C ist besonders vorteilhaft im Zusammenhang mit den weiteren Aspekten der vorliegenden Erfindung und insbesondere bei Betrieb im insbesondere zweiten Feldschwächbereich.

Die auch Rotormagnete genannten Permanentmagnete 21 des Rotor 20 des Elektromotors 1 sind bevorzugt im Rotorpaket vergraben. Durch die bevorzugte IPMSM (Interior Permanent Magnet Synchronous Motor) Bauweise (mit eingelassenen Permanentmagneten 21) können d- und q-Achsen-Induktivitäten unterschiedlich realisiert sein.

Durch die bevorzugte außenliegende Oberfläche 22C und/oder die vergrabenen Permanentmagnete 21 werden beim Betrieb des Elektromotors 1 weniger Schwingungen angeregt, was sich positiv auf die Akustik des Elektromotors 1 auswirkt. Darüber hinaus ist der Anteil des Permanentmagnetflusses in den Gleichungen des Regelungssystems, mit dem der Motorregler 40 Phasenströme I_{U}, I_{V}, I_{W} und Phasenspannungen Uu, Uv, Uw bestimmt, in vorteilhafter Weise wesentlich konstanter.

Vorzugsweise ist bei dem Elektromotor 1 eine d-Achsen-Induktivität (Induktivität in Richtung der d-Achse, die sich entlang des magnetischen Flusses des Rotors 20 erstreckt) kleiner als eine q-Achsen-Induktivität (Induktivität in Richtung der q-Achse senkrecht zur d-Achse). Es gilt also bevorzugt L_{d}<L_{q}. In vorteilhafter Weise ist der Elektromotor 1 hierdurch gut feldschwächbar, was den Feldschwächbetrieb (im ersten und insbesondere im zweiten Feldschwächbereich) über einen weiten Drehzahlbereich ermöglicht.

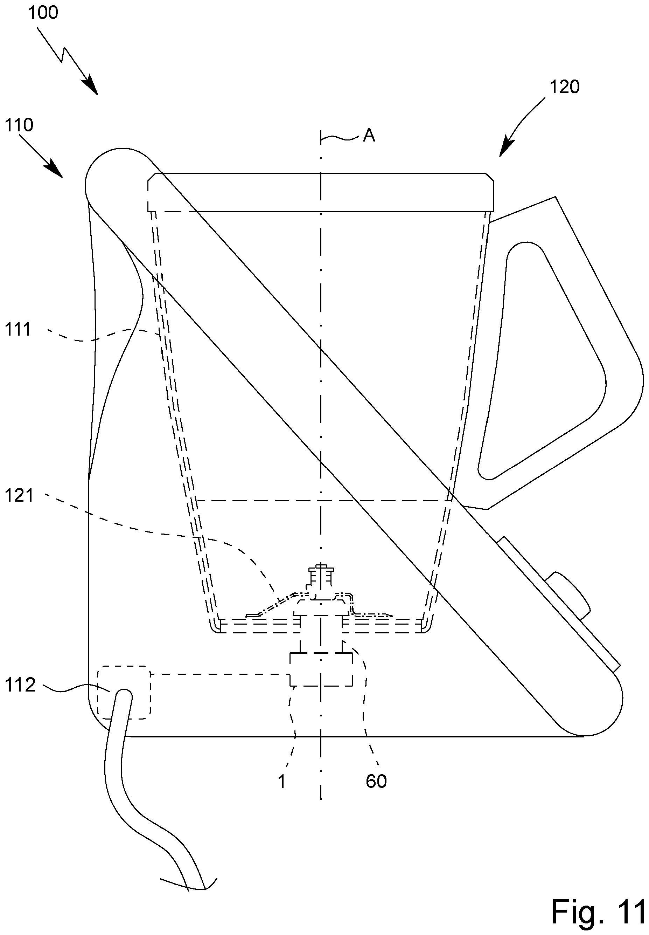

Fig. 11 zeigt schematisch eine vorschlagsgemäße Küchenmaschine 100 zur Zubereitung von Speisen bzw. zur Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 11 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 7 - optional über einen Wellenaufsatz - mit dem Rührer 121 verbunden oder verbindbar ist und/oder - in der Anschlussposition - von unten formschlüssig in den Boden des Gefäßes 120 eingreift.

In der vorschlagsgemäßen Küchenmaschine 100 ist vorzugswiese ein Betrieb eines BLDC- und/oder PMSM-Motors als Elektromotor 1 oder eines anderen elektronisch kommutierten Elektromotors 1 über einen großen Drehzahlbereich (stufenlos und/oder in Stufen einstellbar) vorgesehen.

Vorzugsweise entspricht die Rotationsachse A des Elektromotors 1 der Drehachse des Rührers 121 und/oder einer Mittelachse des Gefäßes 120, die mittig durch das Gefäß 120 verläuft. Insbesondere ist oder wird der Rührer 121 durch den Elektromotor 1 direkt angetrieben.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 wie den Motorregler 40, den Wechselrichter 41, und/oder die PFC 42 mit elektrischem Strom zu versorgen, wie auch in Fig. 1 angedeutet.

Abhängig von der Drehgeschwindigkeit bzw. Drehzahl des Rührers 121 bzw. Elektromotors 1 ist die Küchenmaschine 100 vorzugsweise sowohl zum Rühren bzw.Kneten (bei kleinen Drehzahlen) als auch zum Zerkleinern (bei großen Drehzahlen) von Zutaten ausgebildet. Besonders bevorzugt ist auch ein langsames Rühren, beispielsweise mit 10 U/min und/oder ein sehr feines bzw. definiertes Zerkleinern, beispielsweise mit 10.000 U/min möglich. Letzteres wird in besonders bevorzugter Weise durch den vorschlagsgemäßen Betrieb des Elektromotors 1 im Feldschwächbereich und insbesondere (auch) im zweiten Feldschwächbereich erreicht.

Die Küchenmaschine 1 kann insbesondere an der Basisstation 110 eine Benutzerschnittstelle 113 aufweisen. Mit der Benutzerschnittstelle 113 können Eingaben getätigt werden, die den Motorregler 40 dazu zu konfigurieren, den Elektromotor 1 in einer bestimmten Art und Weise zu betreiben.

Insbesondere können über die Benutzerschnittstelle 113 dem Motorregler 40 eine Drehzahl, ein periodisches Drehzahlprofil wie ein Pulsbetrieb, allgemeiner gesprochen ein Drehzahl- bzw. Drehmomentverlauf mit über der Zeit variierenden Werten und/oder ein Rezept mit entsprechenden Angaben vorgegeben oder dazu ausgebildet sein.

Die Benutzerschnittstelle 113 kann dabei den Motorregler 40 so konfigurieren, dass er mit dem Wechselrichter 41 Phasenstrom- bzw. Phasenspannungsverläufe der Phasen U, V, W erzeugt, um den Elektromotor 1 entsprechend zu regeln.

Vorschlagsgemäß wird der Elektromotor 1 der Küchenmaschine 100 im zweiten Feldschwächbereich betrieben oder ist dazu ausgebildet. Ein Beispiel dafür, wie dies bewirkt werden kann, ist im Zusammenhang mit Fig. 8 und Fig. 9 im Detail erläutert. Die Einstellungen der Küchenmaschine 100 unterstützen eine Konfiguration bzw. Steuerung des Motorreglers 40 derart, dass der Elektromotor 1 im zweiten Feldschwächbereich betrieben wird oder betreibbar ist.

Es versteht sich, dass der Elektromotor 1 mit der Konstruktion und/oder Regelung gemäß des Ausführungsbeispiels aus Fig. 1 als Antrieb oder Teil des Antriebs der Küchenmaschine 100 besonders bevorzugt ist. Dennoch sind die weiteren, insbesondere regelungstechnischen Aspekte der vorliegenden Erfindung nicht auf das konkrete Beispiel für den Elektromotor 1 gemäß Fig. 1 beschränkt. Diese können also auch mit anders konstruierten Elektromotoren, bevorzugt BLDC- und/oder PMSM-Motoren, kombiniert vorteilhaft in der Küchenmaschine 1 vorgesehen sein oder eingesetzt werden.

Der in der Küchenmaschine 100 vorschlagsgemäß eingesetzte Elektromotor 1 weist bevorzugt eine Polpaarzahl von fünf auf. Diese hat sich bei der Anwendung des Elektromotors 1 zum Antrieb des Rührers 121 als besonders günstig in Bezug auf Rundlauf, Geräuschentwicklung, Kraftentfaltung, Gewicht und Volumen gezeigt, besonders wenn, wie bevorzugt, der Elektromotor 1 im Feldschwächbereich und insbesondere auch im zweiten Feldschwächbereich betrieben wird oder betreibbar ist.

Die elektrische Aufnahmeleistung des Antriebssystems (Elektromotor 1 mit Steuerelektronik - Motorregler 40, Wechselrichter 41, optional PFC-Schaltung 42) der Küchenmaschine 100 ist vorzugsweise begrenzt. Sie beträgt insbesondere weniger als 1000 W, insbesondere weniger als 800 W oder maximal 600W.

Ein Links- und Rechtslauf ist vorzugsweise einstellbar bzw. die Küchenmaschine 100 ist dazu ausgebildet, über Änderung der Motordrehrichtung einen Links- und Rechtslauf des Rührers 121 zu ermöglichen. Ferner arbeitet der Elektromotor 1 vorzugsweise getriebelos bzw. mit Direktantrieb.

Mit Hilfe des bevorzugt vektorbasierten Regelungsverfahrens wird bei dem Elektromotor 1 unter Einsatz in der vorschlagsgemäßen Küchenmaschine 100 eine Feldschwächung erreicht. Grundsätzlich sind jedoch auch - insbesondere außerhalb des (zweiten) Feldschwächbereichs - andere Regelverfahren alternativ oder zusätzlich möglich (z.B. Steuerung ohne Regelverfahren, blockkommutierte Regelverfahren).

Durch den Einsatz eines stetig beschreibbaren Regelungsverfahrens kann der Elektromotor 1 in der Küchenmaschine 100 über den gesamten (einstellbaren) Betriebsbereich (Drehzahlbereich, Drehmomentbereich und/oder hinsichtlich jeder Eingangsgröße) betrieben werden. D.h. es gibt vorzugsweise einen geschlossenen funktionalen Zusammenhang zwischen allen Eingangsgrößen und allen Ausgangsgrößen der Motorregelung (MIMO-System). Aus diesem Grunde wird vorzugsweise ein vektorbasiertes Regelungsverfahren eingesetzt, welches sich als geeignet gezeigt hat, die Regelung geschlossen-funktional über den gesamten gewünschten Betriebsbereich (bezogen auf die Regelgrößen) abzubilden.

Das Regelungsverfahren ist vorzugsweise stetig modelliert, definiert bzw. beschrieben, und zwar weiter bevorzugt über den gesamten verfügbaren bzw. einstellbaren Drehzahlbereich und/oder Drehmomentbereich. Hierdurch kann eine Umschaltung von Regelungsverfahren merklich bei Änderung der Drehzahlen bzw. Lasten vermieden werden.

Der Vorteil dieses stetig beschreibbaren Regelungsverfahrens ist insbesondere, dass nicht zwischen unterschiedlichen empirisch ermittelten Betriebsverfahren (hart) umgeschaltet werden muss. Stattdessen sind bevorzugt stetige, kontinuierliche Übergänge vorgesehen. Die Regelungsverfahren können also "weich" (ohne sprunghafte Änderungen) ineinander übergehen.

Bei Laständerung [z.B. wenn Kartoffeln in das Gefäß 120 insbesondere mit laufendem Rührer 121 geworfen werden] werden andere Betriebsbereiche bzw. Betriebsparameter erzeugt, die ggf. die Verwendung eines anderen Regelungsverfahrens bedingen.

Die Änderung auf ein anderes Regelungsverfahren konnte in der Vergangenheit für den Anwender wahrnehmbare Sprünge hinsichtlich der Drehzahl und des Drehmomentes bewirken. Unter Umständen waren diese Sprünge akustisch wahrnehmbar. Im Extremfall konnten ferner Betriebspunkte angefahren werden, in denen permanent zwischen zwei unterschiedlichen Regelungsverfahren hin und her gewechselt wurde. Dies wird nun vorzugsweise vermieden.

Vorzugsweise wird ein Modulationsverfahren höherer Ordnung, insbesondere "Space vector modulation with trapezodial zero-sequence" zur Regelung des Elektromotors 1 der Küchenmaschine 100 verwendet. Dies trägt zur verbesserten Ausnutzung einer begrenzten Eingangsspannung bzw. Zwischenkreisspannung Uz bei. Insbesondere kann dadurch vermieden werden, schon bei niedrigeren Drehzahlen eine verstärkte Feldschwächung vorzunehmen zu müssen, die bei begrenzter Eingangsleistung zu einer Reduktion der mechanischen Abtriebsleistung führen würde. Es wird also ein höheres Drehmoment bei gleicher Drehzahl bzw. ein erweitertes Drehzahlspektrum ermöglicht.

Bei vorschlagsgemäßem Einsatz von Elektromotoren 1 mit so großer Drehzahlspreizung in der Küchenmaschine 100 und insbesondere bei Betrieb des Elektromotors 1 im (zweiten) Feldschwächbereich hat es sich als vorteilhaft erwiesen, Maßnahmen zu ergreifen, um eine Entmagnetisierung der Permanentmagnete 21 zu verhindern.

Wenn ein Fehlerstrom in den Spulen 11 erkannt wird, werden in einem Aspekt der vorliegenden Erfindung die Phasenströme I_{U}, I_{V}, I_{W} abgeschaltet, damit sich diese nicht (weiter) vergrößern. Eine Gefahr eines Fehlerstroms besteht tendenziell bei den kleinen bis mittleren Drehzahlen (~ 1 bis 3000rpm) und bei gleichzeitig hohen erforderlichen Drehmomenten. Um Fehlerströme zu erkennen bzw. zu überwachen, kann eine Shuntmessung erfolgen.

Wird ein Fehlerstrom erkannt, kann ein (dreipoliger) Phasenkurzschluss erfolgen, indem die Klemmspannungen bzw. Phasenspannung Uu, Uv, Uw auf gemeinsames Potential gezogen werden. Energie, die sich im Motor befindet, baut sich dann von selbst ab.

Es ist besonders bevorzugt, dass der Elektromotor 1 der Küchenmaschine 100 nur 20 bis 60 %, insbesondere 25 bis 50 %, des insgesamt verfügbaren bzw. einstellbaren Drehzahlbereichs des Elektromotors 1 bzw. Rührers 121 im Ankerstellbereich und im Übrigen im Feldschwächbereich betrieben wird.

Der Feldschwächbereich, in dem der Elektromotor 1 entsprechend bevorzugt 40 bis 80 %, insbesondere 50 bis 70 %, des insgesamt verfügbaren bzw. einstellbaren Drehzahlbereichs des Elektromotors 1 bzw. Rührers 121 der Küchenmaschine betrieben wird oder betreibbar ist, teilt sich in den ersten Feldschwächbereich und den zweiten Feldschwächbereich auf.

Insbesondere beträgt das Verhältnis (etwa) 20% bis 40 % Ankerstellbereich (constant torque area) zu 60 % bis 80% Feldschwächbereich (constant power area).

Es ist hierbei bevorzugt, dass ein Betrieb des Elektromotors 1 jedenfalls auch im zweiten Feldschwächbereich erfolgt.

Auf den insgesamt verfügbaren bzw. einstellbaren Drehzahlbereich (einschließlich Ankerstellbereich) bezogen erfolgt der Betrieb im ersten Feldschwächbereich vorzugweise zu 20 bis 50 %, insbesondere 25 bis 60 %, und/oder im zweiten Feldschwächbereich vorzugsweise zu 20 bis 60 %, insbesondere zu 25 bis 50 %.

Vorzugsweise ist/wird der Elektromotor 1 bis zur Nenndrehzahl, insbesondere bis höchstens 3000 U/min oder bis höchstens 4000 U/min, im Ankerstellbereich betreibbar/betrieben. Bei darüberhinausgehenden Drehzahlen ist/wird der Elektromotor 1 vorzugsweise im Feldschwächbereich betreibbar/betrieben, besonders bevorzugt mit Drehzahlen bis zu 10.000, 12.000 oder 15.000 U/min oder mehr.

Vorzugsweise ist/wird der Elektromotor 1 (oberhalb der Nenndrehzahl) bei Drehzahlen bis höchstens 9000 U/min, insbesondere bis höchstens 7000 U/min, im ersten Feldschwächbereich betreibbar/betrieben. Bei darüberhinausgehenden Drehzahlen ist/wird der Elektromotor 1 vorzugsweise im zweiten Feldschwächbereich betreibbar/betrieben, besonders bevorzugt mit Drehzahlen bis zu 10.000, 12.000 oder 15.000 U/min oder mehr.

Es wird vorzugweise ein vektorbasiertes Regelungsverfahren eingesetzt, um den Elektromotor 1 in der Küchenmaschine 100 zu betreiben, insbesondere wie im Zusammenhang mit Fig. 1 erläutert.

Die Eingangsspannung bzw. Zwischenkreisspannung Uz kann zur Reduktion des Spannungshubs und damit der maximal möglichen Stellgröße (insbesondere der Phasenströme I_{U}, I_{V}, I_{W} und/oder Phasenspannungen Uu, Uv, Uw) reduziert werden. Hierzu kann die PFC Schaltung bewusst ausgeschaltet werden, insbesondere bei kleinen Drehzahlen bzw. im Ankerstellbereich.

Es können eine oder mehrere sequenziell ausgewertete Shuntmessungen (im vorhandenen Antriebssystem drei Shunts) zur Vermeidung einer (dreisträngigen) Strangstrommessung eingesetzt werden, um das Sensorsignal 43 zu bilden bzw. den Elektromotor 1 zu regeln.

Der Elektromotor 1 und/oder die Motorregelung 40 weisen, insbesondere im Gegensatz zum Einsatz von SR-Motoren, vorzugsweise keine feldorientierte Regelung, eine stabile Regelbarkeit der Drehzahlstufen und/oder ein stetiges Regelverfahren, bei dem das Regelverfahren durchgängig läuft (kontinuierlich bzw. stetig ist), auf.

Durch die beschriebenen Maßnahmen kann eine hohe Drehzahlspreizung in einer Küchenmaschine (z.B. +/- 1-12.000 rpm) erreicht werden. Hierbei ist der Elektromotor 1 leiser, bietet eine höhere Laufruhe, geringere Drehmomentschwankungen und ein Getriebe in der Küchenmaschine 1 ist nicht erforderlich (Kosten und Materialeinsparung). Das Antriebssystem der Küchenmaschine 100 wird auch robuster. Es kann ein stufenloser Betrieb ermöglicht werden.

Alternativ oder zusätzlich vorgesehene diskrete Drehzahl-Stufen können umkonfiguriert bzw. umprogrammiert werden. Akustikprobleme und mechanische Schäden durch Schwingungen können vermieden werden. Drehmomentschwankungen aufgrund unstetiger Ansteuerverfahren werden vermieden. Schließlich tragen die vorschlagsgemäßen Aspekte zu reproduzierbaren Knet-, Rühr-, Pürier- und/oder Kochergebnissen unter Vermeidung von Beeinflussungen des Lebensmittels bzw. Gargutes bedingt durch das Ansteuerverfahren des Elektromotors 1 bei.

Einzelne Aspekte, Merkmale und/oder Verfahrensschritte der vorliegenden Erfindung können unabhängig, aber auch in unterschiedlichen Kombinationen und/oder Reihenfolgen realisiert werden.

### Bezugszeichenliste:

- 1: Elektromotor

- 10: Stator
- 11: Spule
- 12: Statorkern
- 12A: Statorblech
- 13: Spulenträger
- 14: Anschlusseinrichtung
- 14A: Kontakt/Klemme
- 14B: Sternpunkt
- 15: Statorschlitz
- 16: Spannungskomponente

- 20: Rotor
- 21: Permanentmagnet
- 22: Rotorkern
- 22A: Rotorblech
- 22B: Sektorabschnitt
- 22C: Außenliegende Oberfläche
- 22D: Zylindrische Kontur
- 23: Welle

- 30: Lüfter

- 40: Motorregler
- 41: Wechselrichter
- 42: Power Factor Correction
- 43: Sensorsignal

- 100: Küchenmaschine
- 110: Basisstation
- 111: Aufnahme
- 112: Stromversorgung
- 113: Benutzerschnittstelle

- 120: Gefäß
- 121: Rührer

- A: Rotationsachse
- N: Nordpol
- S: Südpol

- U: Phase
- V: Phase
- W: Phase

- I_{U}: Phasenstrom Phase U
- I_{V}: Phasenstrom Phase V
- I_{W}: Phasenstrom Phase W

- Uu: Phasenspannung Phase U
- Uv: Phasenspannung Phase V
- Uw: Phasenspannung Phase W

- U_{GU}: Gegen-EMK-Spannung Phase U
- U_{GV}: Gegen-EMK-Spannung Phase V
- U_{GW}: Gegen-EMK-Spannung Phase W

- Ru: Wicklungswiderstand Phase U
- Rv: Wicklungswiderstand Phase V
- Rw: Wicklungswiderstand Phase W

- Lu: Wicklungsinduktivität Phase U
- Lv: Wicklungsinduktivität Phase V
- Lw: Wicklungsinduktivität Phase W

- Uz: Zwischenkreisspannung

## Patentansprüche

1. Verfahren zum Betrieb einer Küchenmaschine (100), deren Rührer (121) mit einem elektronisch kommutierten Elektromotor (1) angetrieben wird oder ist,
**dadurch gekennzeichnet,**
**dass** der Elektromotor (1) zumindest auch im - insbesondere zweiten - Feldschwächbereich betrieben wird.

2. Verfahren nach Anspruch 1, **dadurch gekennzeichnet, dass** der Elektromotor (1) in mindestens 25 % eines einstellbaren Drehzahlbereichs des Elektromotors (1) im zweiten Feldschwächbereich betrieben wird.

3. Verfahren nach Anspruch 1 oder 2, **dadurch gekennzeichnet, dass** eine einstellbare oder im Betreib erreichte Drehzahl des Elektromotors (1) mindestens 5000 Umdrehungen pro Minute, insbesondere mindestens 10000 Umdrehungen pro Minute beträgt.

4. Verfahren nach einem der voranstehenden Ansprüche, **dadurch gekennzeichnet, dass** der Elektromotor (1) vektorbasiert geregelt wird oder ist.

5. Verfahren nach einem der voranstehenden Ansprüche, **dadurch gekennzeichnet, dass** der Elektromotor (1) ein bürstenloser Gleichstrommotor und/oder Permanentmagnet-Synchronmotor ist, vorzugsweise mit sieben bis zwölf Polen und/oder 9 bis 15 Statorschlitzen.

6. Verfahren nach einem der voranstehenden Ansprüche, **dadurch gekennzeichnet, dass** der Elektromotor (1) im Links- und Rechtslauf betreibbar ist oder betrieben wird.

7. Verfahren nach einem der voranstehenden Ansprüche, **dadurch gekennzeichnet, dass** der Rührer (121) durch den Elektromotor (1) direkt getriebelos angetrieben wird oder ist.

8. Verfahren nach einem der voranstehenden Ansprüche, **dadurch gekennzeichnet, dass** der Elektromotor (1) mit einer Power Factor Correction (42) betrieben wird, vorzugswiese wobei die Power Factor Correction (42) bei niedrigen Drehzahlen oder im Ankerstellbereich des Elektromotors (1) deaktiviert wird oder ist.

9. Verfahren nach einem der voranstehenden Ansprüche, **dadurch gekennzeichnet, dass** eine Gegen-EMK des Elektromotors (1) überwacht wird.

10. Verfahren nach Anspruch 9, **dadurch gekennzeichnet, dass** bei Erkennung einer zu großen Gegen-EMK ein Stromwinkel zwischen Phasenströmen (lu, Iv, Iw) und einem Rotorfluss aktiv angepasst wird und/oder Phasenströme (lu, Iv, Iw) moduliert und/oder reduziert wird/werden, um einen magnetischen Fluss eines Rotors (20) des Elektromotors (1) zu begrenzen oder zu reduzieren.

11. Verfahren nach einem der voranstehenden Ansprüche, **dadurch gekennzeichnet, dass** der Elektromotor (1) mit Phasenströmen (lu, Iv, Iw) und/oder Phasenspannungen (Uu, Uv, Uw) betrieben wird, die mit einem Modulationsverfahren höherer Ordnung, insbesondere einer Space Vector Modulation, bevorzugt mit trapezförmiger Nullsequenz, erzeugt sind oder werden.

12. Verfahren nach einem der voranstehenden Ansprüche, **dadurch gekennzeichnet, dass** der Elektromotor (1) mit einer Regelcharakteristik geregelt wird, die auf einem geschlossenen funktionalen Zusammenhang zwischen Eingangsgrößen und Ausgangsgrößen basiert, sodass ein Wechsel zwischen unterschiedlichen, den Elektromotor (1) regelnden Regelverfahren, insbesondere bei einer Laständerung, stetig und unter Vermeidung von abrupten Änderungen oder Sprüngen von Spannungs- und/oder Stromverläufen erfolgt.

13. Verfahren nach einem der voranstehenden Ansprüche, **dadurch gekennzeichnet, dass** der Elektromotor (1) basierend auf einem Sensorsignal (43) korrespondierend zu einer absoluten Rotorposition, zu einem oder mehreren Strangströmen oder Phasenströmen (I_{U}, I_{V}, I_{W}) des Elektromotors (1), zu einer Zwischenkreisspannung (Uz) des Elektromotors (1), und/oder zu einer Motortemperatur, als Eingangsgrößen für ein den Elektromotor (1) regelndes Regelverfahren oder einen Motorregler (40) und/oder unter Berücksichtigung von Parametern korrespondierend zu einem Massenträgheitsmoment, einem oder mehreren Spulenwiderständen, einem oder mehreren Induktivitätswerten und/oder einer Flussverkettung von Permanentmagneten (21) des Rotors (20) geregelt wird.

14. Verfahren nach einem der voranstehenden Ansprüche, **dadurch gekennzeichnet, dass** Phasenströme (lu, Iv, Iw) und/oder Strangströme des Elektromotors (1) überwacht werden und bei Identifikation eines Fehlerstroms, insbesondere eines einen Schwellwert überscheitenden der Phasenströme (I_{U}, I_{V}, I_{W}) oder Strangströme, die Phasenströme (lu, Iv, Iw) und/oder Strangströme abgeschaltet werden und/oder ein Kurzschluss der Phasen (U, V, W) erfolgt.

15. Küchenmaschine (100) aufweisend einen Rührer (121) und einen elektronisch kommutierten Elektromotor (1) zum Antrieb des Rührers (121), wobei die Küchenmaschine (1) einen Motorregler (40) zur Regelung des Elektromotors (1) aufweist und dazu ausgebildet ist, ein Verfahren nach einem der voranstehenden Ansprüche durchzuführen.
